# EUROPÄISCHE PATENTANMELDUNG

(11) **EP 3 808 579 A1**
(43) Veröffentlichungstag der Anmeldung: **21.04.2021**
(21) Anmeldenummer: 20194342.0
(22) Anmeldetag: 03.09.2020
(51) Int. Cl.: B60G 11/27, F16F 9/04, F16F 9/05

(54) **FEDERBALG EINER LUFTFEDER UND VERFAHREN ZU DESSEN HERSTELLUNG**

(30) Priorität: 17.10.2019 DE 102019215987
(71) Anmelder: ContiTech Luftfedersysteme GmbH, 30165 Hannover (DE)
(72) Erfinder: Scheible, Matthias - c/o Continental AG, 30419 Hannover (DE)
(74) Vertreter: Continental Corporation

(57) **Zusammenfassung**

Die Erfindung betrifft einen Federbalg (2) einer Luftfeder, welcher mit einem elastomeren Werkstoff hergestellt ist und eine schlauchförmige Gestalt aufweist, wobei der Federbalg (2) mindestens einen axial endseitigen Ringwulst (12) hat, in dem ein Kernring (20) angeordnet ist, sowie eine aus mindestens einer Gewebelage bestehenden Verstärkungslage (22) aufweist, welche in der Balgwand (4) des Federbalgs (2) eingebettet und mit einem Endabschnitt (24) in Form einer Kernschlinge (30) um den Kernring (20) umgeschlagen angeordnet ist. Zur Verlängerung der Nutzungsdauer eines solchen Federbalgs (2) ist gemäß der Erfindung vorgesehen, dass der betreffende Endabschnitt (24) der Verstärkungslage (22) in Form einer Kernschlinge (30) von radial außen nach radial innen um den Kernring (20) umgeschlagen angeordnet ist, und dass das freie Ende (28) der Verstärkungslage (22) im montierten Zustand des Federbalgs (2) radial innerhalb des Außendurchmessers (KD) des Kernrings (20) angeordnet ist.

## Beschreibung

Die Erfindung betrifft einen Federbalg einer Luftfeder, welcher mit einem elastomeren Werkstoff hergestellt ist und eine schlauchförmige Gestalt aufweist, wobei der Federbalg mindestens einen axial endseitigen Ringwulst hat, in dem ein Kernring angeordnet ist, sowie eine aus mindestens einer Gewebelage bestehenden Verstärkungslage aufweist, welche in der Balgwand des Federbalgs eingebettet und mit einem Endabschnitt in Form einer Kernschlinge um den Kernring umgeschlagen angeordnet ist. Außerdem betrifft die Erfindung ein Verfahren zur Herstellung eines derartigen Federbalgs.

Luftfedern werden in vielfältigen Anwendungen zur Federung und Dämpfung eingesetzt. In Fahrzeugen, wie Kraftfahrzeugen, Schienenfahrzeugen und Kabinenbahnen, sind Luftfedern jeweils zwischen einem Bauteil einer Fahrzeugachse, wie einem Achsträger, einem Querlenker oder einem Längslenker, und einem tragenden Bauteil einer Fahrzeugkarosserie, wie einem Fahrzeugrahmen oder einem Karosserieholm, angeordnet und dienen zu Abfederung des jeweiligen Fahrzeugaufbaus gegen Unebenheiten der Fahrbahn oder des Gleises. Bei stationären Maschinen, Industrieanlagen und Gebäudeteilen sind Luftfedern jeweils zwischen einem Boden oder einem Fundament sowie einer tragenden Basis angeordnet und dienen als pneumatisch aktive Elemente zur Schwingungsisolierung der jeweiligen Maschine, Anlage oder des Gebäudeteils gegen Erschütterungen des Bodens.

Hinsichtlich der Ausführungen ihrer Federbälge werden Luftfedern in zwei Bauarten eingeteilt. In einer ersten Bauart von Luftfedern ist der Federbalg als ein Faltenbalg mit mindestens einer ringförmigen Falte ausgeführt, durch die zwei wulstförmige Abschnitte des Federbalgs miteinander verbunden sind. Bei einer derartigen Luftfeder können beide Endabschnitte des Federbalgs jeweils mit einem durch einen Kernring verstärkten Ringwulst versehen sein, mit dem sie druckdicht an jeweils einem Anschlussteil befestigt sind. Die Kernringe bestehen üblicherweise aus einem Metalldraht, sie können aber auch aus einer Textilfaser gebildet sein. In einer zweiten Bauart von Luftfedern ist der Federbalg als ein Rollbalg mit einer zumeist unten angeordneten Rollfalte ausgebildet, dessen zugeordneter Endabschnitt an einem Abrollkolben oder an einem mit diesem verbundenen Aufnahmestück befestigt ist und beim Ein- und Ausfedern der Luftfeder an der Außenwand des Abrollkolbens abrollt. Auch bei einer derartigen Luftfeder können die beiden Endabschnitte des Federbalgs jeweils mit einem durch einen Kernring verstärkten Ringwulst versehen sein, mit dem diese druckdicht an einem Anschlussteil beziehungsweise an einem Abrollkolben oder einem mit diesem verbundenen Aufnahmestück befestigt sind.

In einer speziellen Bauart einer Luftfeder, die bevorzugt bei Schienenfahrzeugen zur Anwendung kommt, ist der Federbalg als ein sogenannter Halbbalg ausgeführt und weist einen einzigen wulstförmigen Abschnitt mit einem größeren oberen Durchmesser und einem kleineren unteren Durchmesser auf. Mit seinem oberen Endabschnitt ist der Federbalg druckdicht an einem Anschlussteil befestigt, welches mit dem Wagenkasten des Schienenfahrzeugs verbindbar ist, oder er ist über einen Befestigungsring unmittelbar an dem Wagenkasten des Schienenfahrzeugs befestigt. Mit seinem unteren Ende ist der Federbalg meistens über einen Anschlagring an einem zylindrischen Stützkörper befestigt, der mit einem Drehgestell des Schienenfahrzeugs verbunden ist. Auch bei einer derartigen Luftfeder können die beiden Endabschnitte des Federbalgs jeweils mit einem durch einen Kernring verstärkten Ringwulst versehen sein, mit dem diese druckdicht an einem Anschlussteil oder einem Wagenkasten beziehungsweise an einem Stützkörper befestigt sind. Als Halbbälge ausgeführte Federbälge von für Schienenfahrzeuge vorgesehenen Luftfedern sind beispielsweise aus der DE 21 08 694 C2 und der DE 40 11 517 A1 bekannt.

Der Federbalg einer Luftfeder besteht üblicherweise weitgehend aus einer Elastomermatrix mit einer radial inneren Elastomerschicht und einer radial äußeren Elastomerschicht, welche die Innenseite beziehungsweise die Außenseite der Balgwand des Federbalgs bilden. In dieser Balgwand ist zur Verstärkung sowie zur Versteifung derselben eine aus meistens mehreren Gewebelagen bestehende Verstärkungslage eingebettet ist. Die üblicherweise aus Textilfasern gebildeten Fäden der Gewebelagen sind oft in bestimmten Winkeln sowie symmetrisch kreuzend zueinander angeordnet. Zur belastbaren Anbindung der Balgwand an den jeweiligen Ringwulst ist der betreffende Endabschnitt der Verstärkungslage jeweils in Form einer Kernschlinge um den Kernring umgeschlagen angeordnet. Da der Federbalgrohling bei seiner Herstellung auf einem zylindrischen Wickelwerkzeug dort von radial innen nach radial außen aufgebaut wird, erfolgt das erwähnte Umschlagen des jeweiligen Endabschnittes der Verstärkungslage um den betreffenden Kernring üblicherweise von radial innen nach radial außen, welches verfahrenstechnisch vergleichsweise einfach ist.

Ein mit einem Ringwulst, einem in diesem angeordneten Kernring und einer in Form einer Kernschlinge um den Kernring umgeschlagenen angeordneten Verstärkungslage versehener, als Rollbalg ausgeführter Federbalg einer Luftfeder ist beispielsweise in der DE 10 2004 050 189 A1 beschrieben. Der untere kolbenseitige Endabschnitt dieses Federbalgs weist einen endseitigen Ringwulst auf, in dem ein Kernring angeordnet ist. Eine aus mindestens einer Gewebelage bestehende Verstärkungslage ist in die Balgwand des Federbalgs eingebettet und mit dem betreffenden Endabschnitt in Form einer Kernschlinge um den Kernring umgeschlagen angeordnet. Das freie Ende der Verstärkungslage endet radial außerhalb des Durchmessers des Kernrings und nahe zum Arbeitsraum des Federbalgs.

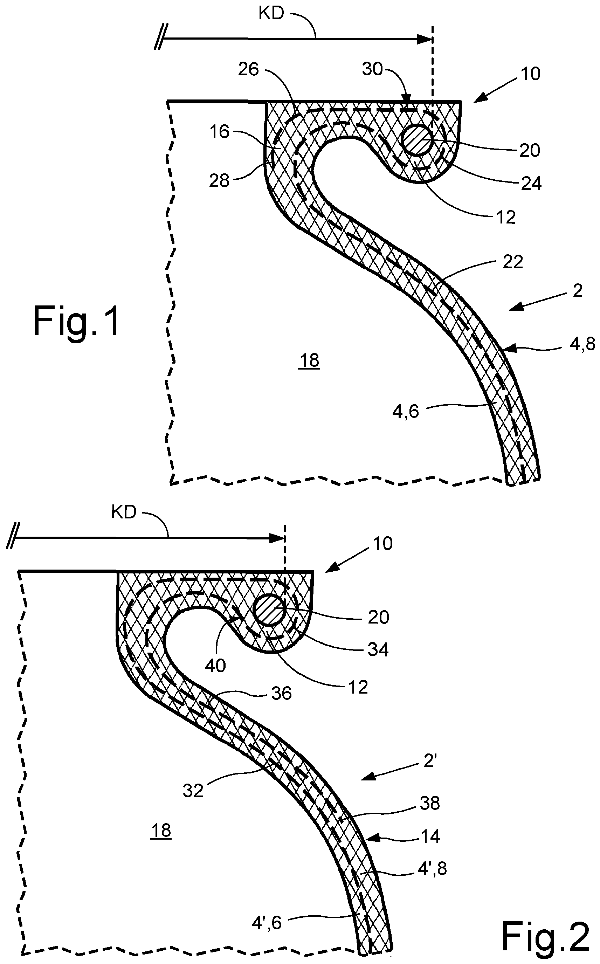

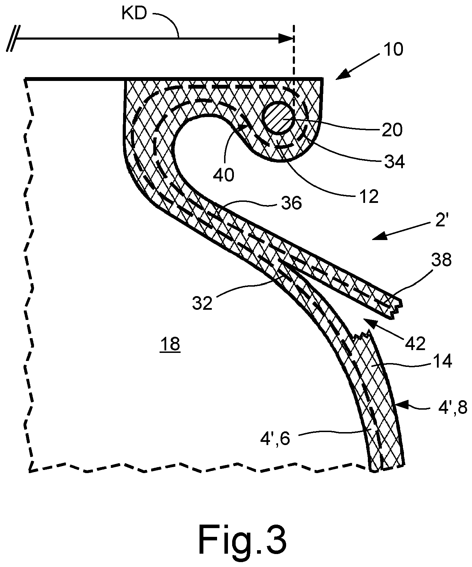

Bei einem als Halbbalg ausgeführten Federbalg einer Luftfeder befindet sich das freie Ende der Verstärkungslage bei einer Umschlingung des Kernrings von radial innen nach radial außen jedoch bezüglich des von dem Federbalg eingeschlossenen Arbeitsraums radial außen (siehe Figuren 2 und 3). Bei einer hohen Belastung des Federbalgs durch Ein- und Ausfedern eines Wagenkastens sowie durch eine Drehung des betreffenden Drehgestells gegenüber dem Wagenkasten kann es aufgrund des dortigen Steifigkeitssprungs zu einem Aufreißen der Balgwand beziehungsweise der Kernschlinge am freien Ende der Verstärkungslage kommen. Da der aufgerissene Bereich der Balgwand radial außen liegt und somit der Umgebung ausgesetzt ist, können dort Fremdkörper, wie Schmutzpartikel, eindringen und zu einem Durchscheuern der äußeren Elastomerschicht sowie der tragenden Verstärkungslage führen, welches einen vorzeitigen Ausfall der Luftfeder zur Folge hat.

Der vorliegenden Erfindung lag daher die Aufgabe zugrunde, einen Federbalg einer Luftfeder der eingangs genannten Bauart vorzuschlagen, bei dem die Gefahr eines Aufreißens der Balgwand beziehungsweise der Kernschlinge am freien Ende der Verstärkungslage reduziert und damit eine längere Gebrauchsdauer des Federbalgs erzielt wird. Außerdem sollte ein Verfahren zur Herstellung eines derartigen Federbalgs einer Luftfeder angegeben werden.

Die den Federbalg betreffende Aufgabe ist durch einen Federbalg gelöst, welcher die Merkmale des Anspruchs 1 aufweist. Der unabhängige Verfahrensanspruch definiert ein Verfahren zur Herstellung eines solchen Federbalgs. Die jeweils zugeordneten abhängigen Ansprüche geben vorteilhafte Weiterbildungen an.

Die Erfindung betrifft demnach zunächst einen Federbalg einer Luftfeder, welcher mit einem elastomeren Werkstoff hergestellt ist und eine schlauchförmige Gestalt aufweist. Der Federbalg hat mindestens einen axial endseitigen Ringwulst, in dem ein Kernring angeordnet ist. Außerdem weist der Federbalg eine aus mindestens einer Gewebelage bestehende Verstärkungslage auf, welche in der Balgwand des Federbalgs eingebettet ist sowie mit einem Endabschnitt in Form einer Kernschlinge um den Kernring umgeschlagen angeordnet ist.

Zur Lösung der vorrichtungsbezogenen Aufgabe ist bei diesem Federbalg vorgesehen, dass der betreffende Endabschnitt der Verstärkungslage in Form einer Kernschlinge von radial außen nach radial innen um den Kernring umgeschlagen angeordnet ist, und dass das freie Ende der Verstärkungslage im montierten Zustand des Federbalgs radial innerhalb des Außendurchmessers des Kernrings angeordnet ist.

Dadurch, dass der Endabschnitt der Verstärkungslage bei dem erfindungsgemäßen Federbalg in Form einer Kernschlinge von radial außen nach radial innen um den Kernring umgeschlagen angeordnet ist, können im Fall eines Aufreißens der Balgwand beziehungsweise der Kernschlinge am freien Ende der Verstärkungslage dort keine Fremdkörper, wie Schmutzpartikel, mehr eindringen, da dieser Bereich nun innerhalb des von dem Federbalg eingeschlossenen Arbeitsraums liegt. Durch die Anordnung des freien Endes der Verstärkungslage radial innerhalb des Außendurchmessers des Kernrings ist dieser kritische Bereich der Verstärkungslage weiter vor schädlichen mechanischen Einwirkungen geschützt. Eine Luftfeder mit einem erfindungsgemäß ausgeführten Federbalg weist somit eine deutlich verlängerte Nutzungsdauer auf.

Die Gefahr eines Aufreißens der Balgwand beziehungsweise der Kernschlinge im Bereich des freien Endes der Verstärkungslage kann zudem dadurch reduziert sein, dass dieses freie Ende der Verstärkungslage in einem steifen Abschnitt der Balgwand nahe des endseitigen Ringwulstes angeordnet ist, welcher im montierten Zustand unter Belastung nicht oder nur geringfügig elastisch verformbar ist.

Der beschriebene, die Merkmale der Erfindung aufweisende Federbalg ist bevorzugt als Halbbalg einer Schienenfahrzeug-Luftfeder ausgebildet.

Wie erwähnt betrifft die Erfindung auch ein Verfahren zur Herstellung eines Federbalgs einer Luftfeder, welcher mit einem elastomeren Werkstoff hergestellt wird und eine schlauchförmige Gestalt aufweist, wobei der Federbalg mindestens einen axial endseitigen Ringwulst hat, in dem ein Kernring angeordnet ist, und eine aus mindestens einer Gewebelage bestehenden Verstärkungslage aufweist, welche in der Balgwand des Federbalgs eingebettet sowie mit einem Endabschnitt in Form einer Kernschlinge um den Kernring umgeschlagen angeordnet ist.

Bei diesem Verfahren ist vorgesehen, dass ein Federbalgrohling vor dessen Vulkanisieren durch Übereinanderlegen von Lagen aus dem elastomeren Werkstoff, der Verstärkungslage und dem Kernring aufgebaut wird, wobei der betreffende Endabschnitt der Verstärkungslage in Form einer Kernschlinge bezüglich deren Anordnung im fertiggestellten Federbalg von radial außen nach radial innen um den Kernring umgeschlagen wird, und wobei das freie Ende der Verstärkungslage derartig angeordnet wird, dass dieses im montierten Zustand des Federbalgs radial innerhalb des Außendurchmessers des Kernrings liegt.

Dieses Verfahren ist mit bekannten sowie bei der üblichen Federbalgherstellung vorhandenen Fertigungsmitteln vergleichsweise einfach durchführbar und erzeugt einen Federbalg mit einer gegenüber dem Stand der Technik verlängerten Nutzungsdauer.

Ein Verfahrensablauf zur Herstellung eines derartigen Federbalgs weist bevorzugt die folgenden Verfahrensschritte auf:
a) Auflegen einer unvulkanisierten, im fertigen Federbalg radial äußeren Elastomerschicht auf ein zylindrisches Wickelwerkzeug zur Erzeugung eines Federbalgrohlings,
b) Auflegen einer aus mindestens einer Gewebelage bestehenden Verstärkungslage mit einem zunächst axial überstehenden Abschnitt auf die später radial äußere Elastomerschicht,
c) endseitiges Auflegen eines Kernrings auf die später radial äußere Elastomerschicht und die Verstärkungslage,
d) Umschlagen des betreffenden Endabschnittes der Verstärkungslage um den Kernring, bezüglich deren Anordnung auf dem Wickelwerkzeug von radial innen nach radial außen, und Auflegen des überstehenden Abschnittes der Verstärkungslage auf die Verstärkungslage,
e) Auflegen einer unvulkanisierten, im fertigen Federbalg radial inneren Elastomerschicht auf den Endabschnitt und auf die Verstärkungslage,
f) Entnahme des Federbalgrohlings von dem Wickelwerkzeug,
g) Umstülpen des Federbalgrohlings derartig, dass dessen zunächst radial äußere Seite nach radial innen weist,
h) Aufbringen des Federbalgrohlings auf eine zylindrische Vulkanisierform,
i) Vulkanisieren des Federbalgrohlings.

Um die Gefahr eines Aufreißens der Balgwand beziehungsweise der Kernschlinge im Bereich des freien Endes der Verstärkungslage zu reduzieren kann vorgesehen sein, dass die Länge des zunächst axial überstehenden Abschnittes der Verstärkungslage derart bemessen ist, dass das freie Ende der Verstärkungslage beim Umschlagen in einem steifen Abschnitt der Balgwand nahe des endseitigen Ringwulstes angeordnet wird, welcher im montierten Zustand unter Belastung nicht oder nur geringfügig elastisch verformbar ist.

### Zur weiteren Verdeutlichung der Erfindung ist der Beschreibung eine Zeichnung mit einem Ausführungsbeispiel beigefügt. In dieser zeigt

Fig. 1 einen erfindungsgemäßen Federbalg einer Luftfeder in einer ausschnittsweisen Querschnittsansicht,
Fig. 2 einen bekannten Federbalg einer Luftfeder im unbeschädigten Zustand in einer ausschnittsweisen Querschnittsansicht, und
Fig. 3 den bekannten Federbalg gemäß Fig. 2 im beschädigten Zustand in einer ausschnittsweisen Querschnittsansicht.

Eine in Fig. 2 abgebildete bekannte Ausführungsform eines als Halbbalg ausgebildeten Federbalgs 2' einer Luftfeder weist eine wulstartig geformte Balgwand 4' auf, an deren oberen Endabschnitt 10 ein Ringwulst 12 ausgeformt ist. Innerhalb des Ringwulstes 12 ist ein Kernring 20 angeordnet, der beispielsweise aus einem Metalldraht bestehen kann. Die Balgwand 4' des Federbalgs 2' weist eine radial innere Elastomerschicht 6 und eine radial äußere Elastomerschicht 8 auf, zwischen denen eine aus mindestens einer Gewebelage bestehende Verstärkungslage 32 eingebettet ist. Die radial innere Elastomerschicht 6 umgrenzt einen mit Druckluft befüllbaren Arbeitsraum 18 des Luftfederbalgs 2'.

Der entsprechende Endabschnitt 34 der Verstärkungslage 32 ist in Form einer Kernschlinge 40 von radial innen nach radial außen um den Kernring 20 umgeschlagen angeordnet. Die Länge des bei der Herstellung des Federbalgs 2' zunächst überstehenden Abschnitts 36 der Verstärkungslage 32 ist vorliegend derart bemessen worden, dass das freie Ende 38 der Verstärkungslage 32 in einem elastischen Abschnitt 14 der Balgwand 4' angeordnet ist, der im montierten Zustand unter Belastung elastisch verformbar ist. Deutlich erkennbar ist das freie Ende 38 der Verstärkungslage 32 radial außerhalb des Außendurchmessers KD des Kernrings 20 angeordnet.

Da die Balgwand 4' im Bereich des freien Endes 38 der Verstärkungslage 32 zwangsläufig einen Steifigkeitssprung aufweist, kann es dort zu einem Aufreißen der Balgwand 4' beziehungsweise der Kernschlinge 40 kommen. Der Federbalg 2' mit einer dementsprechend aufgerissenen Balgwand 4' ist in Fig. 3 abgebildet. In den durch das Aufreißen der Balgwand 4' gebildeten keilförmigen Zwischenraum 42 können Fremdkörper, insbesondere Schmutzpartikel, eindringen, und dort zu einem Durchscheuern der radial äußeren Elastomerschicht 8 und der tragenden Verstärkungslage 32 führen, welches ein Ende der Nutzungsdauer der Luftfeder zur Folge hat.

Eine in Fig. 1 abgebildete erfindungsgemäße Ausführungsform eines als Halbbalg ausgebildeten Federbalgs 2 einer Luftfeder weist ebenfalls eine wulstartig geformte Balgwand 4 auf, an deren oberen Endabschnitt 10 ein Ringwulst 12 ausgeformt ist. Innerhalb des Ringwulstes 12 ist ein Kernring 20 angeordnet. Die Balgwand 4 des Federbalgs 2 weist eine radial innere Elastomerschicht 6 und eine radial äußere Elastomerschicht 8, zwischen denen eine aus mindestens einer Gewebelage bestehende Verstärkungslage 22 eingebettet ist.

Im Unterschied zu der bekannten Ausführung des Federbalgs 2' gemäß den Figuren 2 und 3 ist bei dem erfindungsgemäßen Federbalg 2 der entsprechende Endabschnitt 24 der Verstärkungslage 22 nun jedoch in Form einer Kernschlinge 30 von radial außen nach radial innen um den Kernring 20 umgeschlagen angeordnet. Außerdem ist das freie Ende 28 der Verstärkungslage 22 radial innerhalb des Außendurchmessers KD des Kernrings 20 angeordnet, wodurch dieser hinsichtlich mechanischer Außeneinwirkung empfindliche Bereich zusätzlich geschützt ist.

Zudem ist die Länge des bei der Herstellung des Federbalgs 2 zunächst axial überstehenden Abschnitts 26 der Verstärkungslage 22 nun derart bemessen, dass das freie Ende 28 der Verstärkungslage 22 in einem steifen Abschnitt 16 der Balgwand 4 angeordnet ist, der im montierten Zustand unter Belastung nicht oder nur geringfügig elastisch verformbar ist.

Durch die geschilderten Merkmale des Federbalgs 2 ist die Gefahr eines Aufreißens der Balgwand 4 beziehungsweise der Kernschlinge 30 im Bereich des freien Endes 28 der Verstärkungslage 22 deutlich reduziert. Sollte es hier dennoch zu einem Aufreißen der Balgwand 4 kommen, so können dort keine Fremdkörper mehr eindringen, da dieser Bereich nun innerhalb des von dem Federbalg 2 eingeschlossenen Arbeitsraums 18 liegt. Eine Luftfeder mit einem erfindungsgemäß ausgebildeten Federbalg 2 weist somit im Vergleich mit Federbälgen mit konventionellem Aufbau eine deutlich verlängerte Nutzungsdauer auf.

### B ezugszei chenli ste

- 2: Federbalg, Halbbalg
- 2': Federbalg, Halbbalg (Stand der Technik)
- 4: Balgwand
- 4': Balgwand (Stand der Technik)
- 6: Innere Elastomerschicht des Federbalgs 2
- 8: Äußere Elastomerschicht des Federbalgs 2
- 10: Oberer Endabschnitt des Federbalgs
- 12: Ringwulst des Federbalgs
- 14: Elastischer Abschnitt des Federbalgs
- 16: Steifer Abschnitt des Federbalgs
- 18: Arbeitsraum
- 20: Kernring
- 22: Verstärkungslage
- 24: Endabschnitt der Verstärkungslage 22
- 26: Überstehender Abschnitt der Verstärkungslage 22
- 28: Freies Ende der Verstärkungslage 22
- 30: Kernschlinge
- 32: Verstärkungslage (Stand der Technik)
- 34: Endabschnitt der Verstärkungslage 32
- 36: Überstehender Abschnitt der Verstärkungslage 32
- 38: Freies Ende der Verstärkungslage 32
- 40: Kernschlinge (Stand der Technik)
- 42: Zwischenraum
- KD: Außendurchmessers des Kernrings 20

## Patentansprüche

1. Federbalg (2) einer Luftfeder, welcher mit einem elastomeren Werkstoff hergestellt ist und eine schlauchförmige Gestalt aufweist, wobei der Federbalg (2) mindestens einen axial endseitigen Ringwulst (12) hat, in dem ein Kernring (20) angeordnet ist, sowie eine aus mindestens einer Gewebelage bestehenden Verstärkungslage (22) aufweist, welche in der Balgwand (4) des Federbalgs (2) eingebettet und mit einem Endabschnitt (24) in Form einer Kernschlinge (30) um den Kernring (20) umgeschlagen angeordnet ist, **dadurch gekennzeichnet, dass** der betreffende Endabschnitt (24) der Verstärkungslage (22) in Form einer Kernschlinge (30) von radial außen nach radial innen um den Kernring (20) umgeschlagen angeordnet ist, und dass das freie Ende (28) der Verstärkungslage (22) im montierten Zustand des Federbalgs (2) radial innerhalb des Außendurchmessers (KD) des Kernrings (20) angeordnet ist.

2. Federbalg nach Anspruch 1, **dadurch gekennzeichnet, dass** das freie Ende (28) der Verstärkungslage (22) in einem steifen Abschnitt (16) der Balgwand (4) nahe des endseitigen Ringwulstes (12) angeordnet ist, welcher im montierten Zustand unter Belastung nicht oder nur geringfügig elastisch verformbar ist.

3. Federbalg nach Anspruch 1 oder 2, **dadurch gekennzeichnet, dass** der Federbalg als Halbbalg einer Schienenfahrzeug-Luftfeder ausgebildet ist.

4. Verfahren zur Herstellung eines Federbalgs (2) einer Luftfeder, welcher mit einem elastomeren Werkstoff hergestellt wird und eine schlauchförmige Gestalt aufweist, wobei der Federbalg (2) mindestens einen axial endseitigen Ringwulst (12) hat, in dem ein Kernring (20) angeordnet ist, und eine aus mindestens einer Gewebelage bestehenden Verstärkungslage (22) aufweist, welche in der Balgwand (4) des Federbalgs (2) eingebettet sowie mit einem Endabschnitt (24) in Form einer Kernschlinge (30) um den Kernring (20) umgeschlagen angeordnet ist, **dadurch gekennzeichnet, dass** ein Federbalgrohling vor dessen Vulkanisieren durch Übereinanderlegen von Lagen aus dem elastomeren Werkstoff, der Verstärkungslage (22) und dem Kernring (20) aufgebaut wird, wobei der betreffende Endabschnitt (24) der Verstärkungslage (22) in Form einer Kernschlinge (30) bezüglich deren Anordnung im fertiggestellten Federbalg (2) von radial außen nach radial innen um den Kernring (20) umgeschlagen wird, und wobei das freie Ende (28) der Verstärkungslage (22) derartig angeordnet wird, dass dieses im montierten Zustand des Federbalgs (2) radial innerhalb des Außendurchmessers (KD) des Kernrings (20) liegt.

5. Verfahren zur Herstellung eines Federbalgs (2) nach Anspruch 4, **gekennzeichnet durch** folgende Verfahrensschritte:
a) Auflegen einer unvulkanisierten, im fertigen Federbalg (2) radial äußeren Elastomerschicht (8) auf ein zylindrisches Wickelwerkzeug zur Erzeugung eines Federbalgrohlings,
b) Auflegen einer aus mindestens einer Gewebelage bestehenden Verstärkungslage (22) mit einem zunächst axial überstehenden Abschnitt (26) auf die später radial äußere Elastomerschicht (8),
c) endseitiges Auflegen eines Kernrings (20) auf die später radial äußere Elastomerschicht (8) und die Verstärkungslage (22),
d) Umschlagen des betreffenden Endabschnittes (24) der Verstärkungslage (22) um den Kernring (20), bezüglich deren Anordnung auf dem Wickelwerkzeug von radial innen nach radial außen, und Auflegen des überstehenden Abschnittes (26) der Verstärkungslage (22) auf die Verstärkungslage (22),
e) Auflegen einer unvulkanisierten, im fertigen Federbalg (2) radial inneren Elastomerschicht (6) auf den Endabschnitt (24) und auf die Verstärkungslage (22),
f) Entnahme des Federbalgrohlings von dem Wickelwerkzeug,
g) Umstülpen des Federbalgrohlings derartig, dass dessen zunächst radial äußere Seite nach radial innen weist,
h) Aufbringen des Federbalgrohlings auf eine zylindrische Vulkanisierform,
i) Vulkanisieren des Federbalgrohlings.

6. Verfahren zur Herstellung eines Federbalgs nach Anspruch 4 oder 5, **dadurch gekennzeichnet, dass** die Länge des zunächst axial überstehenden Abschnittes (26) der Verstärkungslage (22) derart bemessen ist, dass das freie Ende (28) der Verstärkungslage (22) beim Umschlagen in einem steifen Abschnitt (16) der Balgwand (4) nahe des endseitigen Ringwulstes (12) angeordnet wird, welcher im montierten Zustand unter Belastung nicht oder nur geringfügig elastisch verformbar ist.
